# EUROPÄISCHE PATENTSCHRIFT

(11) **EP 2 383 136 B1**
(45) Veröffentlichungstag und Bekanntmachung des Hinweises auf die Patenterteilung: **04.12.2013**
(21) Anmeldenummer: 11162761.8
(22) Anmeldetag: 16.04.2011
(51) Int. Cl.: B60J 10/08, B60J 10/00, E06B 7/22, E06B 7/23

(54) **Dichtungseinrichtung für eine Fahrzeugtür**
Sealing strip for a vehicle door
Joint d'étanchéité pour une porte de véhicule

(30) Priorität: 30.04.2010 DE 202010006253 U
(43) Veröffentlichungstag der Anmeldung: 02.11.2011
(73) Patentinhaber: GUMMI-WELZ GmbH u. Co. KG GUMMI-KUNSTSTOFFTECHNIK-SCHAUMSTOFFE, 89231 Neu-Ulm (DE)
(72) Erfinder: Fritsche, Wolfgang, 89134, Blaustein (DE); Grein, Horst, 34637, Schrecksbach (DE)
(74) Vertreter: König, Beate

(56) Entgegenhaltungen:
- WO-A2-2008/043859
- DE-A1- 2 401 465
- DE-C- 911 376
- DE-U1-202004 006 968
- DE-U1-202009 008 974
- US-A1- 2004 145 213

## Beschreibung

Die Erfindung betrifft eine Dichtungseinrichtung insbesondere für eine Fahrzeugtür, umfassend eine gummielastische Profilleiste, die an der Stirnseite der Fahrzeugtür angeordnet ist, sowie eine Profilgegenleiste, die an einem Gegenelement angeordnet ist, wobei eine der Profilleisten einen Vorsprung und die andere Profilleiste eine Aufnahme für den Vorsprung der einen Profilleiste aufweist. Eine vorzugsweise scharnierartig angelenkte Außen- und Innenlippe sind angeformt und bei Schließen der Fahrzeugtür mit dem Vorsprung in Eingriff bringbar.

Eine so aufgebaute Dichtungseinrichtung für eine Fahrzeugtür mit mindestens einem Fingerschutzprofil ist in der EP 1 288 420 B1 beschrieben. Ein elektrischer Sensor ist in einer an der Stirnseite einer vorstehenden Kammer einer Profilleiste aufgenommen, wobei die Kammer zu beiden Seiten schwenkbeweglich ausgebildet ist. Die gegenüberliegende Profilleiste hat eine an die Außenkontur der Kammer angepasste gewölbte Andruckfläche an der Stirnseite und nahe dem Profilfuß einen weiteren elektrischen Sensor. Der Abstand der Andruckfläche von der Stirnseite der vorstehenden Kammer wird eingestellt, um eine definierte Verformung der Kammer im Fall eines Einklemmereignisses zu erzielen. Bei einer alternativen Ausführung wird durch die vorstehende Kammer eine Dichtlippe an der gegenüberliegenden Stirnseite gegen diese gedrückt.

Eine Dichtungseinrichtung gemäß der gattungsgemäßen DE 20 2009 008 974 U1 weist an der einen Profilleiste einen Vorsprung auf. Diesem gegenüberliegt eine vorgewölbte, deformierbare Wand, die eine Hohlkammer begrenzt und durch den Vorsprung aus einer ersten in eine zweite Position bringbar ist. Es sind eine Außen- und eine Innenlippe vorgesehen, die nur zusätzlich abdichten. Die eigentliche Abdichtung wird durch die deformierbare Wand und den Vorsprung erzielt.

Bei einem Abdichtsystem für eine Fahrzeugtür gemäß EP 0 835 781 B1 sind jeweils zwei Dichtlippen im Abstand zueinander am Profilkörper angeordnet. Bei geschlossener Tür liegen die Dichtlippen auf die Außenseite des Fahrzeugs weisend aneinander.

Zur Türabdichtung insbesondere bei Kraftfahrzeugen ist es aus der DE 20 36 075 A bekannt, das Türabdichtprofil mit jeweils gegenüberliegenden flexiblen äußeren Anschlaglippen und mit weiteren Abdichtlippen in erforderlicher Anzahl zwischen diesen zu versehen. Bei geschlossener Tür gelangen die Anschlag- und Abdichtlippen zur gegenseitigen Anlage und dichten ab.

Bei einer Dichtungseinrichtung gemäß DE 20 2004 006 968 U1 hat eine Profilleiste einen Vorsprung (Feder) und die gegenüberliegende Profilleiste hat eine Vertiefung (Nut). An den Seitenwänden der Vertiefung befinden sich zum Boden weisende Lippen, die sich beim Eindringen des Vorsprungs an diesen anlegen. Das wesentliche Merkmal der bekannten Dichtungseinrichtung ist, dass die beiden gegenüberliegenden Profilleisten "in einer echten Nut-Feder-Verbindung ineinander greifen" (Absatz 0004) und somit eine formschlüssige Verbindung bilden.

Der Erfindung liegt die Aufgabe zugrunde, eine Dichtungseinrichtung für eine Fahrzeugtür zu schaffen, die bei Fahrzeugtüren verschiedener Schließ- und Öffnungskinematiken einsetzbar ist und einen Toleranzausgleich für das Türspaltmaß liefert.

Diese Aufgabe ist durch die Erfindung bei einer Dichtungseinrichtung mit den Merkmalen des Anspruchs 1 gelöst. Vorteilhafte Weiterbildungen der erfindungsgemäßen Dichtungseinrichtung sind Gegenstand der Unteransprüche.

Eine Dichtungseinrichtung insbesondere für eine Fahrzeugtür gemäß der Erfindung umfasst somit eine gummielastische Profilleiste, die an der Stirnseite der Fahrzeugtür angeordnet ist, sowie eine Profilgegenleiste, die an einem Gegenelement angeordnet ist, wobei eine der Profilleisten (z.B. die Profilgegenleiste) einen zentral angeordneten Vorsprung aufweist und die andere Profilleiste eine Aufnahme für den Vorsprung der einen Profilleiste aufweist. Am Ende der Stirnseite der jeweils anderen Profilleiste ist eine vorzugsweise scharnierartig angelenkte Außen- und Innenlippe angeformt. Die andere Profilleiste weist auf der Stirnseite zwischen der Außen- und Innenlippe zumindest zwei stirnseitig elastisch und/ oder federnd deformierbare beabstandete Lippen auf, die in einer ersten Position von der Profilstirnseite aus vorkragend und in einem Zustand mit elastischer Spannung sind. Die elastisch und/oder federnd deformierbaren Lippen sind durch Druckbeaufschlagung von der Seite und/oder von der Stirnseite her durch den Vorsprung der einen Profilleiste aus der ersten Position mittels Deformation in Richtung der Stirnseite in eine zweite Position bringbar, in der sie unter Vorspannung stehen, solange sich die Lippen in Eingriff mit dem Vorsprung der einen Profilleiste befinden. Bei Lösen des Eingriffs mit dem Vorsprung der einen Profilleiste werden die elastisch und/oder federnd deformierbaren Lippen durch vorzugsweise elastische Rückstellkräfte in die erste Position zurückgeführt. Die Stirnseitenkontur ist an die des Vorsprungs der einen Profilleiste angepasst geformt und bildet eine zumindest bereichsweise Aufnahme für den Vorsprung sowie von zumindest zwei deformierbaren Lippen in deren zweiter Position. Zweckmäßig hat die Aufnahme für den Vorsprung der einen Profilleiste eine für einen Toleranzausgleich ausreichende Tiefe.

Mit den elastisch und/oder federnd deformierbaren beabstandeten Lippen, d.h. ihrem Merkmal des Vorkragens und der elastisch-federnden Deformierbarkeit, ist ein Mittel zur Verfügung gestellt worden, das einen Anschlag bzw. eine Angriffsstelle für den Eingriffsvorsprung der gegenüberliegenden Profilleiste darstellt. Im Detail können die elastisch und/oder federnd deformierbaren Lippen unterschiedlich ausgeführt und als Paar oder gegebenenfalls auch in größerer Anzahl vorgesehen sein. Sie müssen jedoch für einen Eingriff des Vorsprungs von außen seitlich oder von innen seitlich (SST - Schwenkschiebetür, AST - Außenschwingtür) ausreichend vorstehend und zur Seite sowie nach innen elastisch bzw. federnd deformierbar sein, so dass die Lippen infolge der Druckbeaufschlagung aus der ersten Position zur zweiten Position umklappen oder umgebogen werden. Vorteilhaft ist die Elastizität der Lippen derart, dass sie bei ausreichender Kraftausübung definiert aus der ersten in die zweite Position und umgekehrt wechseln.

Ebenso ist durch die elastische Eigenspannung der Lippen sichergestellt, dass bei stirnseitigem oder annähernd stirnseitigem Auflaufen (IST - Innenschwenktür, ST - Schiebetür, FT - Falttür) des Gegenprofils eine definierte Auslösung der Kipp- oder Umklappbewegung erfolgt, bis die Lippen elastisch in die zweite Position versetzt werden, in der eine Abdichtung des Spalts zwischen der Profilleiste und dem Gegenprofil mittels des Vorsprungs vorliegt. Je nach Toleranz im Spaltmaß kann der Vorsprung der einen Profilleiste die elastisch und/oder federnd deformierbaren Lippen mehr oder weniger stark druckbeaufschlagen und umbiegen. Die Dichtigkeit ist somit stets gewährleistet.

Die an der Außen- und Innenseite der anderen Profilleiste am Ende der Stirnseite angeformte Außen- und eine Innenlippe dienen zur Unterstützung der Abdichtung. Wenn sich die elastisch und/oder federnd deformierbaren Lippen in der zweiten Position befinden, sind die Außen- und Innenlippe nach außen oder nach innen zur Profilmitte hin ausgelenkt und zum Vorsprung der einen Profilleiste gerichtet. Wenn der Vorsprung des Gegenprofils, d.h. der einen Profilleiste, somit wirksam wird, befinden sich stets mindestens eine der Außen- oder Innenlippen und eine der elastisch und/oder federnd deformierbaren Lippen mit dem Vorsprung in Eingriff.

Die elastisch und/oder federnd deformierbaren Lippen können einen von der Stirnseite aus vorkragenden Abschnitt aufweisen, der am äußeren Ende seitlich abgebogen ist, um das Abbiegen bzw. Umklappen der Lippen zu unterstützen. Zweckmäßig sind die elastisch und/oder federnd deformierbaren Lippen gebogen ausgeführt.

Bei einer vorteilhaften Ausführungsform der erfindungsgemäßen Dichtungseinrichtung sind die elastisch und/oder federnd deformierbaren Lippen scharnierartig an der Profilstirnseite angelenkt. Die Lippen können auch aus mehreren scharnierartig verbundenen Abschnitten bestehen. Bereiche mit dünnerer Wanddicke können als Scharnierverbindung vorgesehen werden. Dies bewirkt, dass der Kraftaufwand für den Positionswechsel der Lippen aus der ersten in die zweite Position gering ist, da die Verstellung mit Hebelarmwirkung erfolgt und dabei nur die Eigensteifigkeit der Lippen in der ersten nicht ausgelenkten Position überwunden werden muss. Die Lippendeformation kann daher sehr schnell ablaufen.

Bei einer anderen Ausführung der erfindungsgemäßen Dichtungseinrichtung sind die vorderen Abschnitte der elastisch und/ oder federnd deformierbaren Lippen vorzugsweise elastisch miteinander verbunden. Es sind Schlitze und/oder Öffnungen zur Entlüftung des von den Lippen umschlossenen Raums bei Deformation vorgesehen. Durch den infolge der Verbindung etwas vergrößerten Widerstand gegen die Deformation kann der Umklapppunkt, d.h. die zum Umklappen benötigte Kraft, genauer festgelegt werden.

Der Eingriffsvorsprung der einen Profilleiste ist zentral angeordnet. Es sind auch Ausführungsformen der erfindungsgemäßen Dichtungseinrichtung vorteilhaft einsetzbar, bei denen der Vorsprung aus der Profilmitte heraus gelegt ist. Dies ist abhängig von den jeweiligen geometrischen Anforderungen des Fahrzeuges, Tors oder dergleichen, an dem die erfindungsgemäße Dichtungseinrichtung vorgesehen ist.

Wenn die Stirnseite an der Außen- und Innenseite der anderen Profilleiste jeweils in einem vorzugsweise nach außen und innen vorstehenden, sich verjüngenden, elastisch deformierbaren Abschnitt endet, ergibt sich einerseits automatisch eine Aufnahmekontur für den zentralen Betätigungsvorsprung. Andererseits wird die elastische Deformation der Profilleiste nach innen unterstützt, wenn direkt Druck ausgeübt wird oder ein Einklemmereignis eintritt.

Vorzugsweise ist die erfindungsgemäße Dichtungseinrichtung mit einem Einklemmschutz ausgestattet.

Die erfindungsgemäße Dichtungseinrichtung kann bei einflügeligen und auch bei zweiflügeligen Türen eingesetzt werden. Das Gegenelement ist im ersten Fall ein Türportal, im zweiten Fall eine Fahrzeugtür.

Im Fall von zweiflügeligen Türen ist es möglich, beide Türflügel gleichzeitig zu betätigen oder einen in der stehenden Position zu belassen. Es ist gleich, ob dann der Türflügel mit der Profilleiste oder der mit der Profilgegenleiste betätigt wird. Durch den ausgeübten Druck ergibt sich bei geschlossener Tür eines Türsystems (ein- und/oder zweiflügelige Türen) durch den Eingriff des Vorsprungs der Profilgegenleiste mit der Wand der Profilleiste automatisch eine Zentrierung des oder der Türflügel(s) und damit eine Stabilisierung des Türsystems, wobei der Türflügel zum anderen Türflügel und/oder Portal hin stabilisiert wird.

Die Erfindung wird im folgenden weiter anhand eines Ausführungsbeispiels und der Zeichnung beschrieben. Diese Darstellung dient lediglich zur Veranschaulichungszwecken und soll die Erfindung nicht auf die konkret angegebenen Merkmalskombinationen einschränken. Es zeigen
- Fig. 1: eine schematische Schnittansicht eines Ausführungsbeispiels einer erfindungsgemäßen Dichtungseinrichtung mit zwei Profilleisten,
- Fig. 2: eine schematische Schnittansicht des Ausführungsbeispiels, die die beiden Profilleisten bei Beginn des Schließeingriffs zeigt, und
- Fig. 3: eine schematische Schnittansicht des Ausführungsbeispiels, die die beiden Profilleisten im Schließeingriff zeigt.

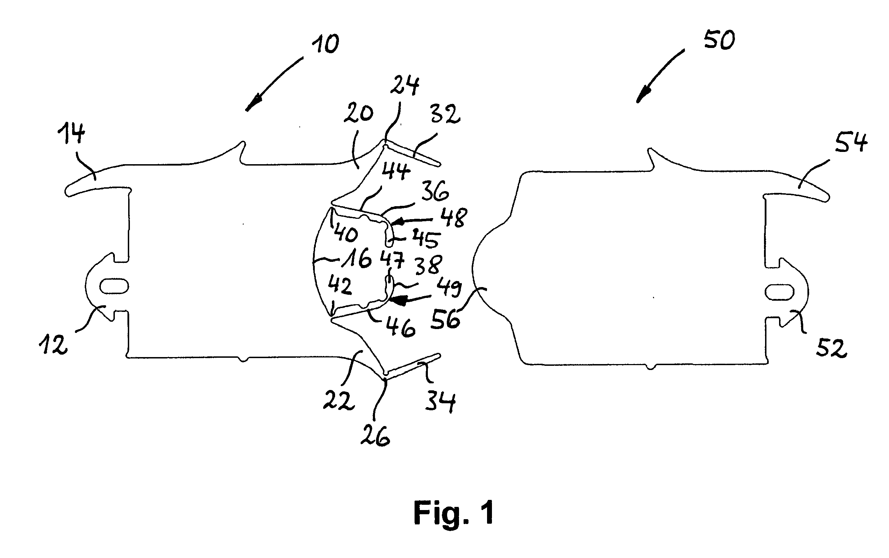

Im folgenden wird anhand von Fig. 1 der Aufbau eines Ausführungsbeispiels der erfindungsgemäßen Dichtungseinrichtung mit zwei Profilleisten 10, 50 beschrieben. Die Profilleisten sind aus gummielastischem Material, beispielsweise EPDM, und sind mittels eines Profilfußes 12, 52 in zugehörigen Ausnehmungen und Halterungsvorsprüngen eines Türprofils befestigbar. Außenlippen 14, 54 schließen die Profilleisten fußseitig ab. Der Innenaufbau der Profilleisten 10, 50 wird nicht im einzelnen beschrieben. Beispielsweise kann ein Einklemmschutz vorgesehen sein.

Hier betrachtet wird der stirnseitige Bereich der beiden Profilleisten 10, 50, über den die Türabdichtung erfolgt. Die Profilleiste 10 weist stirnseitig eine konkave Kontur auf. Im zentralen Bereich ist eine Mulde 16 gebildet. An der Außen-und Innenseite der Profilleiste endet die Stirnseite jeweils in einem etwas nach außen und innen vorstehenden, sich verjüngenden Abschnitt 20, 22, der elastisch deformierbar ist. Von dem vorderen Ende des äußeren Abschnitts 20, 22 erstreckt sich jeweils eine Außen- und Innenlippe 32, 34 leicht nach innen. Im Übergangsbereich zwischen der Außen- und Innenlippe 32, 34 und dem jeweils zugehörigen Abschnitt 20, 22 ist die Materialstärke reduziert, so dass ein Scharniergelenk 24, 26 gebildet ist.

Etwa im Übergangsbereich zwischen dem Abschnitt 20 bzw. 22 und der Mulde 16 erstrecken sich zwei elastische, federnd deformierbare Lippen 36, 38 mit einem vorkragenden Abschnitt 44, 46 von der Profilstirnseite leicht einwärts geneigt in Richtung des Gegenprofils 50. Am Ort 40, 42 der Verbindung mit der Stirnseite der Profilleiste 10 ist die Dicke der Lippen verringert, so dass sich eine scharnierartige Anlenkung der Lippen 36, 38 ergibt. Am vorderen Ende des vorkragenden Abschnitts 44, 46 sind die Lippen 36, 38 seitlich, zueinander hin gebogen, wobei die betreffenden Abschnitte als Querabschnitte 45, 47 bezeichnet werden. Durch Bereiche 48, 49 dünnerer Wanddicke sind die Lippen 36, 38 in mehrere scharnierartig verbundene Abschnitte aufgeteilt. In der dargestellten und hier als erste bezeichneten Position stehen die Lippen 36, 38 unter Spannung und sind dadurch ausgesteift.

Die Profilleiste 50 ist die Gegenleiste zur beschriebenen Profilleiste 10. An der Stirnseite ist sie mit einem vorzugsweise zentralen Vorsprung 56 versehen. Der zentrale Vorsprung ist stirnseitig abgerundet.

Der Vorsprung 56 könnte auch an der Profilleiste 10 und die Lippen 32, 34, 36, 38 an der Gegenleiste 50 vorgesehen werden. Die Funktion der erfindungsgemäßen Dichtungseinrichtung ist dann dieselbe.

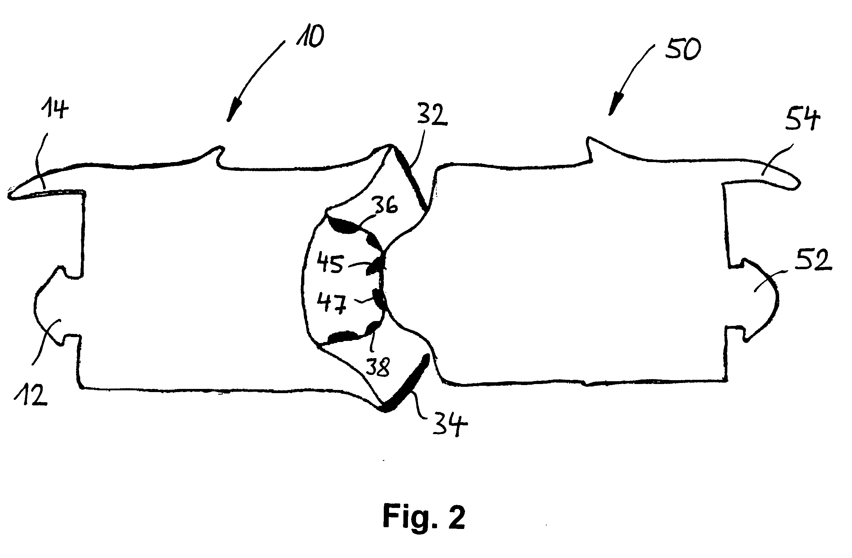

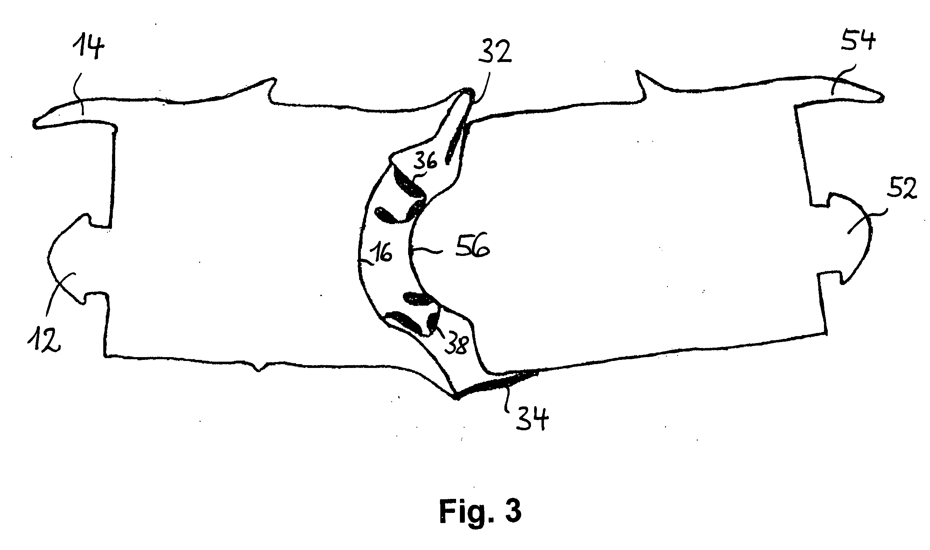

Fig. 2 und 3 veranschaulichen die Schließkinematik, zu der die Profilleiste 10 in der Lage ist. Dabei ist es ohne Einfluss auf die Funktion, ob die Profilleiste 10 und/oder 50 sich alleine bewegt oder sich beide gemeinsam für den Schließvorgang oder auch anschließend fürs Öffnen bewegen.

Die Vorgänge am Anfang der Schließbewegung sind in Fig. 2 veranschaulicht. Kommt der Vorsprung 56 im Verlauf der direkt zulaufendenden Türschließbewegung (FT, IST, AST, SST, ST) mit den Lippen 36, 38 in Kontakt, dann drückt der Vorsprung 56 die Querabschnitte 45, 47 Richtung der Mulde 16. Zugleich treten die Außen- und Innenlippen 32, 34 beidseits des Vorsprungs 56 mit der Stirnseite des Gegenprofils in Kontakt und werden gebogen oder umgeklappt.

Bei der in Fig. 3 gezeigten zweiten Position sind die Lippen 36, 38 im wesentlichen ganz um- bzw. zurückgeklappt. Der zentrale Vorsprung 56 des Gegenprofils befindet sich in Eingriff mit den Lippen 36, 38. Die Außenlippe 32 ist ebenfalls ganz umgeklappt. Die Innenlippe 34 ist zur Veranschaulichung in einer alternativen Position aufgebogen in Anlage an die Seitenwand (Innenwand) des Gegenprofils 50 gezeigt. Dadurch ist eine zusätzliche Abdichtung vorgesehen.

Wenn der Türöffnungsvorgang eingeleitet wird, löst sich der Schließeingriff und die Lippen 36, 38 sowie die Außen- und Innenlippe 32, 34 werden freigegeben. Infolge der Entlastung und zugleich der Vorspannung der Lippen 36, 38 in der zweiten Position, schnappt diese rasch wieder in die erste Position zurück.

Die Dichtungseinrichtung gemäß der Erfindung ist nicht nur für exakt stirnseitige Kontaktierung beim Schließvorgang ausgelegt. Vielmehr kann sie auch bei seitlicher Schließauslösung bzw. -betätigung von außen oder von innen eingesetzt werden. Auch hier ist die Schließ- und Öffnungskinematik unabhängig davon, ob die Tür ein- oder zweiflügelig ist und ob ein oder zwei Türflügel betätigt werden und welcher Türflügel betätigt wird. Der Betätigungseingriff zwischen dem zentralen Vorsprung 56 der Gegenleiste 50 erfolgt nicht zentral an den Lippen 32, 34 wie bei dem vorbeschriebenen Beispiel, sondern an der Außen- bzw. Innenlippe 32, 34. Die zumindest eine zentrale deformierbare Lippe 36, 38 wird zur Profilmitte hin bewegt bzw. verschwenkt, wobei diese Bewegung um die Scharnierachse 40, 42 bzw. 48, 49 abläuft. Am Ende befinden sich die beiden Profilleisten 10, 50 in der in Fig. 3 gezeigten Position. Beim Öffnungsvorgang sind die Bewegungsabläufe umgekehrt.

## Patentansprüche

1. Dichtungseinrichtung insbesondere für eine Fahrzeugtür, umfassend eine gummielastische Profilleiste (10), die an der Stirnseite der Fahrzeugtür angeordnet ist, sowie eine Profilgegenleiste (50), die an einem Gegenelement angeordnet ist, wobei die Profilleiste oder die Profilgegenleiste (50) einen zentral angeordneten Vorsprung (56) aufweist und die jeweils andere Profilleiste (10) eine Aufnahme (16) für den Vorsprung (56) der einen Profilleiste aufweist, wobei an der anderen Profilleiste (10) eine, vorzugsweise scharnierartig, angelenkte Außen- und Innenlippe (32, 34) angeformt sind und bei Schließen der Fahrzeugtür mit dem Vorsprung in Eingriff bringbar sind,
**dadurch gekennzeichnet, dass** auf der Stirnseite zwischen der Außen- und Innenlippe (32, 34) der jeweils anderen Profilleiste (10) zumindest zwei elastisch und/oder federnd deformierbare beabstandete Lippen (36, 38) vorgesehen sind, die in einer ersten Position von der Profilstirnseite aus vorkragend und in einem Zustand mit elastischer Spannung sind,
wobei die elastisch und/oder federnd deformierbaren Lippen (36, 38) durch Druckbeaufschlagung von der Seite und/oder von der Stirnseite her durch den Vorsprung (56) der einen Profilleiste (50) aus der ersten Position mittels Deformation in Richtung der Stirnseite in eine zweite Position bringbar sind, in der sie unter Vorspannung stehen, solange sich die Lippen (36, 38) in Eingriff mit dem Vorsprung (56) der einen Profilleiste (50) befinden, und
wobei die elastisch und/oder federnd deformierbaren Lippen (36, 38) bei Lösen des Eingriffs mit dem Vorsprung (56) der einen Profilleiste (50) durch vorzugsweise elastische Rückstellkräfte in die erste Position zurückgeführt werden,
wobei die Kontur der Stirnseite der jeweils anderen Profilleiste (10) für ein zumindest bereichsweise Aufnahme des Vorsprungs (56) sowie von den zumindest zwei deformierbaren Lippen (36, 38) in deren zweiter Position ausgebildet ist.

2. Dichtungseinrichtung nach Anspruch 1, dadurch **ge- kennzeichnet**, dass die elastisch und/oder federnd deformierbaren Lippen (36, 38) einen von der Stirnseite aus vorkragenden Abschnitt (44, 46) aufweisen, der am äußeren Ende seitlich abgebogen ist.

3. Dichtungseinrichtung nach Anspruch 1 oder 2, **dadurch gekennzeichnet , dass** die elastisch und/oder federnd deformierbaren Lippen (36, 38) scharnierartig an der Profilstirnseite angelenkt sind.

4. Dichtungseinrichtung nach einem der Ansprüche 1 bis 3, **dadurch gekennzeichnet , dass** die elastisch und/oder federnd deformierbaren Lippen (36, 38) aus mehreren scharnierartig verbundenen Abschnitten (44, 45, 46, 47) bestehen.

5. Dichtungseinrichtung nach Anspruch 3 oder 4, **dadurch gekennzeichnet , dass** Bereiche mit dünnerer Wanddicke (40, 42, 48, 49) als Scharnierverbindung jeweils vorgesehen sind.

6. Dichtungseinrichtung nach einem der Ansprüche 1 bis 5, **dadurch gekennzeichnet , dass** die elastisch und/oder federnd deformierbaren Lippen (36, 38) gebogen ausgeführt sind.

7. Dichtungseinrichtung nach einem der Ansprüche 1 bis 6, **dadurch gekennzeichnet , dass** die vorderen Abschnitte der elastisch und/oder federnd deformierbaren Lippen vorzugsweise elastisch miteinander verbunden sind, wobei Schlitze und/oder Öffnungen zur Entlüftung des von den Lippen umschlossenen Raums bei Deformation vorgesehen sind.

8. Dichtungseinrichtung nach einem der Ansprüche 1 bis 7, **dadurch gekennzeichnet , dass** die Stirnseite an der Außen- und Innenseite der jeweils anderen Profilleiste (10) jeweils in einem vorzugsweise nach außen und innen vorstehenden, sich verjüngenden, elastisch deformierbaren Abschnitt (20, 22) endet.

9. Dichtungseinrichtung nach einem der Ansprüche 1 bis 8, **dadurch gekennzeichnet , dass** ein Einklemmschutz vorgesehen ist.

10. Dichtungseinrichtung nach einem der Ansprüche 1 bis 9, **dadurch gekennzeichnet , dass** das Gegenelement ein Türportal ist.

11. Dichtungseinrichtung nach einem der Ansprüche 1 bis 10, **dadurch gekennzeichnet , dass** das Gegenelement eine Fahrzeugtür ist.

## Claims

1. Sealing device, in particular for a vehicle door, comprising a rubber-elastic profile strip (10) which is disposed on the end side of the vehicle door, and a profile counter strip (50) which is disposed on a counter element, wherein the profile strip or the profile counter strip (50) has a centrally disposed projection (56) and the respective other profile strip (10) has a receptacle (16) for the projection (56) of the one profile strip, wherein an outer and inner lip (32, 34) which is articulated preferably in a hinge-like manner is integrally formed on the other profile strip (10) and can be brought into engagement with the projection as the vehicle door is being closed, **characterised in that**
provided on the end side between the outer and inner lip (32, 34) of the respective other profile strip (10) are at least two elastically and/or resiliently deformable, spaced-apart lips (36, 38) which in a first position protrude from the profile end side and in one state are elastically tensioned,
wherein, by means of pressurisation from the side and/or from the end side by the projection (56) of the one profile strip (50), the elastically and/or resiliently deformable lips (36, 38) can be moved from the first position by means of deformation in the direction of the end side to a second position, in which they are pretensioned as long as the lips (36, 38) are in engagement with the projection (56) of the one profile strip (50), and
wherein upon disengagement from the projection (56) of the one profile strip (50) the elastically and/or resiliently deformable lips (36, 38) are returned to the first position by means of preferably elastic restoring forces,
wherein the contour of the end side of the respective other profile strip (10) is formed for the purpose of receiving, at least in regions, the projection (56) and the at least two deformable lips (36, 38) in their second position.

2. Sealing device as claimed in claim 1, **characterised in that** the elastically and/or resiliently deformable lips (36, 38) have a portion (44, 46) which protrudes from the end side and is laterally bent at the outer end.

3. Sealing device as claimed in claim 1 or 2, **characterised in that** the elastically and/or resiliently deformable lips (36, 38) are articulated in a hinge-like manner to the profile end side.

4. Sealing device as claimed in any one of claims 1 to 3, **characterised in that** the elastically and/or resiliently deformable lips (36, 38) consist of a plurality of portions (44, 45, 46, 47) which are connected in a hinge-like manner.

5. Sealing device as claimed in claim 3 or 4, **characterised in that** regions having a thinner wall thickness (40, 42, 48, 49) are provided in each case as a hinge connection.

6. Sealing device as claimed in any one of claims 1 to 5, **characterised in that** the elastically and/or resiliently deformable lips (36, 38) are bent.

7. Sealing device as claimed in any one of claims 1 to 6, **characterised in that** the front portions of the elastically and/or resiliently deformable lips are preferably elastically connected to one another, wherein slots and/or openings are provided to ventilate the space enclosed by the lips during deformation.

8. Sealing device as claimed in any one of claims 1 to 7, **characterised in that** the end side terminates at the outer and inner side of the respective other profile strip (10) in each case in a preferably outwardly and inwardly protruding, tapering, elastically deformable portion (20, 22).

9. Sealing device as claimed in any one of claims 1 to 8, **characterised in that** an anti-trap protection is provided.

10. Sealing device as claimed in any one of claims 1 to 9, **characterised in that** the counter element is a door portal.

11. Sealing device as claimed in any one of claims 1 to 10, **characterised in that** the counter element is a vehicle door.

## Revendications

1. Dispositif d'étanchéité, en particulier pour une porte de véhicule, comprenant une baguette profilée (10) élastique à la façon du caoutchouc qui est disposée sur le côté frontal de la porte de véhicule, ainsi qu'une contre-baguette profilée (50) qui est disposée sur un contre-élément, la baguette profilée ou la contre-baguette profilée (50) présentant une saillie (56) disposée de façon centrale, et l'autre baguette profilée (10) respective présentant un logement (16) pour la saillie (56) de la baguette profilée, une lèvre extérieure et une lèvre intérieure (32, 34) articulée, de préférence à la façon d'une charnière, étant formées sur l'autre baguette profilée (10) et pouvant être mises en prise avec la saillie lors de la fermeture de la porte de véhicule,
**caractérisé en ce que**,
sur le côté frontal entre la lèvre extérieure et la lèvre intérieure (32, 34) de l'autre baguette profilée (10) respective, il est prévu au moins deux lèvres (36, 38) espacées déformables de façon élastique et/ou par ressort qui, dans une première position, sont en porte-à-faux à partir du côté frontal profilé et sont dans un état de tension élastique,
les lèvres (36, 38) déformables de façon élastique et/ou par ressort pouvant, en étant soumises à une pression à partir du côté et/ou du côté frontal par la saillie (56) de la baguette profilée (50), être amenées de la première position, au moyen de la déformation en direction du côté frontal, vers une deuxième position dans laquelle elle sont sous prétension tant que les lèvres (36, 38) sont en prise avec la saillie (56) de la baguette profilée (50), et
les lèvres (36, 38) déformables de façon élastique et/ou par ressort étant, lors de la suppression de la mise en prise avec la saillie (56) de la baguette profilée (50), être ramenées dans la première position de préférence par des forces de rappel élastiques,
le contour du côté frontal de l'autre baguette profilée (10) respective étant constitué pour une réception, au moins par secteurs, de la saillie (56) ainsi que d'au moins deux lèvres (36, 38) déformables dans leur deuxième position.

2. Dispositif d'étanchéité selon la revendication 1, **caractérisé en ce que** les lèvres (36, 38) déformables de façon élastique et/ou par ressort présentent un tronçon (44, 46) qui est en porte à faux à partir du côté frontal et qui est recourbé latéralement à l'extrémité extérieure.

3. Dispositif d'étanchéité selon la revendication 1 ou 2, **caractérisé en ce que** les lèvres (36, 38) déformables de façon élastique et/ou par ressort sont articulées à la façon d'une charnière sur le côté frontal profilé.

4. Dispositif d'étanchéité selon une des revendications 1 à 3, **caractérisé en ce que** les lèvres (36, 38) déformables de façon élastique et/ou par ressort se composent de plusieurs tronçons (44, 45, 46, 47) raccordés à la façon d'une charnière.

5. Dispositif d'étanchéité selon la revendication 3 ou 4, **caractérisé en ce qu'**il est prévu respectivement des secteurs ayant une épaisseur de paroi (40, 42, 48, 49) plus mince en tant que raccordement à charnière.

6. Dispositif d'étanchéité selon une des revendications 1 à 5, **caractérisé en ce que** les lèvres (36, 38) déformables de façon élastique et/ou par ressort sont réalisées de façon courbée.

7. Dispositif d'étanchéité selon une des revendications 1 à 6, **caractérisé en ce que** les tronçons avant des lèvres déformables de façon élastique et/ou par ressort sont raccordés les uns aux autres de préférence de façon élastique, des fentes et/ou des ouvertures étant prévues pour la désaération de l'espace entouré par les lèvres lors de la déformation.

8. Dispositif d'étanchéité selon une des revendications 1 à 7, **caractérisé en ce que** le côté frontal, sur le côté extérieur et le côté intérieur de l'autre baguette profilée (10) respective, se termine respectivement par un tronçon (20, 22) élastiquement déformable, qui va en se rétrécissant et qui fait saillie de préférence vers l'extérieur et vers l'intérieur.

9. Dispositif d'étanchéité selon une des revendications 1 à 8, **caractérisé en ce qu'**il est prévu une protection anti-pincement.

10. Dispositif d'étanchéité selon une des revendications 1 à 9, **caractérisé en ce que** le contre-élément est un cadre de porte.

11. Dispositif d'étanchéité selon une des revendications 1 à 10, **caractérisé en ce que** le contre-élément est une porte de véhicule.
